Europäisches Patentamt

European Patent Office

Office européen des brevets

(11) Publication number: **0 179 937**
**B1**

(12) EUROPEAN PATENT SPECIFICATION

(45) Date of publication of patent specification: **25.04.90**

(21) Application number: **84113061.0**

(22) Date of filing: **30.10.84**

(51) Int. Cl.⁵: **C 08 L 21/00, C 08 L 101/00** //
(C08L21/00, 101:00, 71:02,
39:06, 1:28),(C08L101/00,
21:00, 71:02, 39:06, 1:28)

(54) **Water-swellable elastomer composition.**

(43) Date of publication of application:
**07.05.86 Bulletin 86/19**

(45) Publication of the grant of the patent:
**25.04.90 Bulletin 90/17**

(84) Designated Contracting States:
**AT BE CH DE FR GB IT LI LU NL SE**

(56) References cited:
**EP-A-0 055 848**
**FR-A-2 378 337**
**US-A-4 308 416**
**US-A-4 393 080**

**PATENTS ABSTRACTS OF JAPAN, vol. 7, no.
39(C-151)(1184), 17th February 1983; & JP - A -
57 190 065 (SANYO KASEI KAGYO K.K.) 22-11-
1982 (Cat. D)**

(73) Proprietor: **SEITETSU KAGAKU CO., LTD.**
**346-1, Miyanishi Harimacho, Kako-gun
Hyogo-ken 673-01 (JP)**

(72) Inventor: **Nakamura, Morio**
**6-12, Kamisocho-Miyakodai-3-chome
Kakogawa-shi (JP)**
Inventor: **Obayashi, Shigeji**
**31-2, Matsugaoka-3-chome
Akashi-shi (JP)**
Inventor: **Takemori, Shinichi**
**1-25, Nakajima-2-chome
Takasago-shi (JP)**
Inventor: **Tanaka, Hitoshi**
**790-5, Onoecho-Kuchiri
Kakogawa-shi (JP)**
Inventor: **Hirakawa, Motomu**
**1429-19, Befucho-Shinobe
Kakogawa-shi (JP)**

(74) Representative: **Hansen, Bernd, Dr.rer.nat. et al
Hoffmann, Eitle & Partner Patentanwälte
Arabellastrasse 4 Postfach 81 04 20
D-8000 München 81 (DE)**

## Description

This invention relates to a water-swellable elastomer composition consisting essentially of an elastomer, a water absorbent resin and a water-soluble resin.

Heretofore, there has been proposed the use of a water-swellable rubber which is produced by mixing a rubber with a water-absorbent material such as crosslinked polyvinyl alcohol, crosslinked polyacrylate, crosslinked starch-acrylate copolymer, crosslinked carboxymethylcellulose or the like; a water-swellable urethane resin; a hydrophilic group-containing rubber; or the like for the purpose of the caulking or sealing of gaps or the stopping of water in civil engineering and construction works or the like, or the preservation of airtightness in machinery and apparatus (Japanese Patent Application Kokai (Laid-Open) Nos. 33,032/81 and 190,065/82).

EP—A2 0 055 848 describes a two-component composition of (A) a 1,3-diene rubber as an elastomer component and (B) a highly water-absorbing resin dispersed in the rubber which has an excellent water absorption rate, swelling pressure and other properties when the crystal or glass region content in the rubber as measured at an ordinary temperature is 5—50%.

However, if water-swellability is imparted to a rubber by mixing a water-absorbent material therewith, the swelling rate and degree of swelling of the rubber are low, and in addition, the rubber has also such problems that the water-absorbent material is separated off upon contacting with water for a long period of time, so that the swellability is ultimately lost, the strength is remarkably decreased, and water is polluted.

When a water-swellable urethane resin or hydrophilic group-containing rubber is mixed with a rubber, the water-swellability of the rubber thus obtained is inferior because these have a low degree of swelling and a low swelling rate, and therefore, no satisfactory effect can be expected.

The present inventors have conducted extensive research for the purpose of overcoming the above-mentioned problems. As a result thereof, they have found that when a water-absorbent resin and a water-soluble resin are homogeneously dispersed in an elastomer, the water-absorbent resin can be prevented from being separated off, and the water-swelling elastomer composition has an extremely high swelling rate and an extremely high degree of swelling.

An object of this invention is to provide an elastomer which can be swollen with water.

Another object of this invention is to provide a water-swellable elastomer composition having an extremely high swelling rate and a high degree of swelling.

Other objects and advantages of this invention will be apparent from the following description.

The invention comprises a water-swellable elastomer composition comprising a rubber and a water-absorbent resin, characterized in that it comprises a homogeneous mixture of 100 parts by weight of an elastomer, 5 to 300 parts by weight of a water-absorbent resin which absorbs water in an amount of at least 20 times the weight of the resin and 0.5 to 100 parts by weight of the water-soluble resin, wherein the water-absorbent resin is in form of a powder having a particle diameter of 400 µm or less and the water-soluble resin is selected from polyethylene oxide, a polyvinylpyrrolidone, a hydroxy ethylcellulose and a hydroxy propylcellulose.

The elastomer used in this invention includes a natural rubber and a synthetic rubber. The synthetic rubber includes many known rubbers such as chloroprene rubber, butadiene rubber, styrene-butadien rubber, acrylonitrile-butadiene rubber, isobutylene-isoprene rubber, fluororubber, ethylene-propylene rubber, chlorosulfonated polyethylene, silicone rubber, urethane rubber, polysulfide rubber, acrylic rubber and the like, and it is preferable to use chloroprene rubber or styrene-butadiene rubber from the standpoint of processability and economy.

These rubbers can be properly selected depending upon the application fields of water-swellable rubbers. For instance, chloroprene rubber or chlorosulfonated polyethylene are suitable for the requirement of weather resistance, and silicone rubber or fluororubber are preferred when heat resistance is required.

The water-absorbent resin used in this invention includes crosslinked products of polyacrylates, crosslinked products of starch-acrylate graft copolymers, crosslinked products of a hydrolyzate of starch-acrylonitrile graft copolymer, crosslinked products of carboxymethylcellulose, crosslinked products of polyvinyl alcohol, crosslinked products of a hydrolyzate of methyl (meth)acrylate-vinyl acetate copolymer, crosslinked products of cellulose-sodium acrylate graft copolymer, and the like, and in particular, crosslinked products of polyacrylates have an excellent effect.

Although any of the above water-absorbent resins can be used in this invention, it is necesssary to use a water-absorbent resin which absorbs water in an amount of at least 20 times the weight of the resin.

The water-soluble resin used in this invention is polyethylene oxide, polyvinyl pyrrolidone, hydroxyethylcellulose or hydroxypropylcellulose. Polyethylene oxide and polyvinyl pyrrolidone are preferably used from the standpoint of rubber-compatibility and processability because they are thermoplastic, and a water-swellable elastomer containing polyethylene oxide or polyvinyl pyrrolidone is preferred in view of the appearance and performance.

The amount of the water-absorbent resin added is 5—300 parts by weight, preferably 10—200 parts by weight, per 100 parts by weight of the elastomer. If the content of the water-absorbent resin is too small, neither satisfactory swelling rate nor satisfactory degree of swelling are obtained. On the other hand, if the content is too large, the water-absorbent resin is separated off from the elastomer, and the composition becomes in some cases unsuitable for water stopping or water retention.

A water-swellable elastomer obtained by mixing an elastomer only with a water-absorbent resin as is usual in the conventional method exhibits only slow swelling rate and a low degree of swelling. Moreover, the water-absorbent resin is separated off from the water-swellable elastomer in some cases, and hence, the purpose is not achieved.

However, by adding a water-soluble resin together with a water-absorbent resin to an elastomer according to this invention, a homogeneous water-swelling elastomer composition is obtained, and when it contacts with water a swollen product which has a high degree of swelling, is homogeneous and has a smooth surface, is obtained from the water-swelling elastomer composition.

The amount of the water-soluble resin added is 0.5—100 parts by weight, preferably 1—50 parts by weight, per 100 parts of the elastomer. If the amount of the water-soluble resin is too small, the intended effect of the addition cannot be obtained and the degree of swelling of the elastomer is low. If the amount of the water-soluble resin is too large, the degree of swelling is not so much increased, and adverse effects such as elution or the like tend to take place.

The particle diameter of a water-absorbent resin used in this invention is 400 μm or less, preferably 100 μm or less. If the particle becomes finer, a more homogeneous composition is obtained, and a swollen product obtained therefrom becomes homogeneous.

When 10—100 parts by weight of water per 100 parts by weight of the water-absorbent resin is previously contained in an elastomer prior to mixing the elastomer with the water-absorbent resin, a water-swelling elastomer composition having an extremely high swelling rate is obtained. If the amount of water is too small, the effect is not sufficient. On the other hand, if the amount of water is too large, mixing operation becomes difficult. As for the stage of enabling water to be contained it is not always necessary to previously contain the water in the water-absorbent resin, and an equivalent effect is obtained by adding water at the time of mixing.

The water-swellable elastomer of this invention is produced by uniformly dispersing a water-absorbent resin and a water-soluble resin in an elastomer by a mechanical procedure. For example, roll mixing, mixing with a Banbury mixer, mixing with an extruder, or the like are mechanical dispersing methods which are applicable to this invention. A vulcanizng agent and a vulcanization accelerator are mixed during the mixing procedure in this invention, and if necessary, a coloring agent, a filler, a plasticizer, an antioxidant and the like are incorporated. The compound obtained by mixing is heat-vulcanized and molded according to a conventional method to form a water-swellable elastomer composition in the form of a plate, rod or the like depending on intended uses.

The water-swellable elastomer of this invention can be applied to various uses as water-stopping material, water-retaining material, medical supplies and the like, and suitable compounding recipes are selected depending upon uses to form compositions.

This invention is further explained in detail below referring to Examples and Comparative Examples. However, it should not be interpreted that this invention be limited to the Examples.

Degree of swelling in the Examples and Comparative Examples is defined as follows:

$$\text{Degree of swelling} = \frac{b - a}{a} \times 100\ (\%)$$

a: weight before swelling
b: weight after swelling

The size of a sample is 2 × 4 cm with a thickness of 1 mm.
In the Examples and Comparative E parts are by weight unless otherwise specified.

## Example 1

A compound obtained by roll-mixing a chloroprene tube (Toyo Soda Mfg. Co., Ltd.: Skyprene® B—30) as an elasomer, a crosslinked product of polysodium acrylate (Seitetu Kagaku Co., Ltd.: Aquakeep® 4S, average particle diameter, 70 μm) as a water-absorbent resin and a polyethylene oxide (Seitetsu Kagaku Co., Ltd.: PEO—3) as a water-soluble resin in the amounts shown in Table 1 was vulcanized at 150°C at a presssure of 151 bar (150 kg/cm² G) for 30 minutes to prepare a water-swellable elastomer composition. A sheet of 20 × 40 × 1 mm was formed from this elastomer composition, and soaked in ion-exchanged water to swell the sheet.

The degrees of swelling are shown in Table 2.

Table 1

| Component | Part |
|---|---|
| Chloroprene | 100 |
| Carbon black | 30 |
| Zinc white | 5 |
| Magnesium oxide | 4 |
| Stearic acid | 1 |
| Ethylene thiourea | 0.5 |
| Aquakeep 4S | 100 |
| Polyethylene oxide | 10 |

Table 2

| Soaking Time | 10 min | 1 h | 24 h |
|---|---|---|---|
| Degree of swelling (%) | 40 | 98 | 830 |

Example 2

A compound obtained by roll-mixing a styrene-butadiene rubber (Sumitomo chemical Co., Ltd.: Sumitomo SBR 1778S) as an elastomer, a crosslinked product of polysodium acrylate (Seitetsu Kagaku Co., Ltd.: Aquakeep® 4S, average particle diameter, 70 µm) as a water-absorbent resin and a polyethylene oxide (Seitetsu Kagaku Co., Ltd.: PEO—3) as a water-soluble resin in the amounts shown in Table 3 was vulcanized at 150°C at a pressure of 151 bar (150 kg/cm² G) for 30 minutes to produce a water-swellable elastomer composition. The degree of swelling determined in the same manner as in Example 1 are shown in Table 4.

## Table 3

| Component | Part |
|---|---|
| Styrene-butadiene rubber | 100 |
| Carbon black | 30 |
| Sulfur | 4 |
| 2-Benzothiazyl disulfide | 2 |
| Tetramethylthiuram disulfide | 1 |
| Aquakeep 4S | 100 |
| Polyethylene oxide | 10 |
| Water | 30 |

## Table 4

| Soaking Time | 10 min | 1 h | 24 h |
|---|---|---|---|
| Degree of swelling (%) | 75 | 240 | 1,570 |

### Comparative Example 1

A water-swellable elastomer composition was prepared in the same manner as in Example 1, except that the polyethylene oxide was omitted. Because of the absence of polyethylene oxide, the components were unable to be homogeneously mixed, and the water-absorbent resin was remarkably separated off from the elastomer 2 hours after the soaking in water.

### Comparative Example 2

A water-swellable elastomer composition was prepared in the same manner as in Example 2, except that the polyethylene oxide was omitted. The degrees of swelling determined in the same manner as in Example 1 are shown in Table 5.

## Table 5

| Soaking Time | 10 min | 1 h | 24 h |
|---|---|---|---|
| Degree of swelling (%) | 18 | 45 | 315 |

### Example 3

A water-swellable elastomer composition was prepared in the same manner as in Example 2, except that a crosslinked product of starch-acrylate graft copolymer (Sanyo Chemical Industry, Ltd.: Sanwet® IM—300) was used as a water-absorbent resin instead of the crosslinked product of polysodium acrylate. The degrees of swelling determined in the same manner as in Example 1 are shown in Table 6.

5

EP 0 179 937 B1

Table 6

| Soaking Time | 10 min | 1 h | 24 h |
|---|---|---|---|
| Degree of swelling (%) | 50 | 170 | 1,150 |

Example 4

A water-swellable elastomer composition was prepared in the same manner as in Example 2, except that a hydroxyethylcellulose (FUJI CHEMICAL CO., LTD.: Fujihec® AH—15) was substituted for the polyethylene oxide. The degrees of swelling determined in the same manner as in Example 1 are shown in Table 7.

Table 7

| Soaking Time | 10 min | 1 h | 24 h |
|---|---|---|---|
| Degree of swelling (%) | 40 | 150 | 1,050 |

Example 5

A water-swellable elastomer composition was prepared in the same manner as in Example 2, except that a polyvinylpyrrolidone (KISHIDA KAGAKU: K—15) was substituted for the polyethylene oxide.

Soaking the sheet obtained in water for a predetermined time and observing the surface state, the swollen product was found to be smooth and slimeless. The degrees of swelling determined in the same manner as in Example 1 are shown in Table 8.

Table 8

| Soaking Time | 10 min | 1 h | 24 h |
|---|---|---|---|
| Degree of swelling (%) | 60 | 210 | 1,250 |

Examples 6—10

A water-swellable elastomer composition was prepared by vulcanizing at a pressure of 151 bar (150 kg/cm² G) at 150°C for 30 minutes a compound obtained by roll-mixing the components shown in Table 9 in the same manner as in Example 1. The degrees of swelling determined in the same manner as in Example 1 are shown in Table 10. The swollen sheets had favorable surfaces which were smooth and slimeless.

6

Table 9

(Parts)

| Example No. | | 6 | 7 | 8 | 9 | 10 |
|---|---|---|---|---|---|---|
| EPT | | 100 | | | | |
| NR | | | 100 | | | |
| CSM | | | | 100 | | |
| NBR | | | | | 100 | |
| IIR | | | | | | 100 |
| Carbon black | | 30 | 30 | 30 | 30 | 30 |
| Zinc white (ZnO) | | 3 | 3 | | 5 | 5 |
| Magnesium oxide (MgO) | | | | 5 | | |
| Sulfur (S) | | 1.5 | 2 | | 1.5 | |
| Stearic acid | | 1 | 1 | 1 | 1 | 1 |
| Vulcanization accelerator | M | 0.5 | | | | |
| " | TT | 1.0 | | | 0.5 | |
| " | BZ | | | | | 1 |
| " | TRA | | | 2 | | |
| " | DM | | | 0.5 | | |
| " | PZ | | 1 | | | |
| Antioxidant (Antigen NBC) | | | | | 1 | |
| Process oil | | 10 | 10 | 10 | 10 | 10 |
| AK-4S | | 70 | | 70 | | 70 |
| Waterlock A-100 | | | 70 | | | |
| Sumikagel S-50 | | | | | 70 | |
| Water | | 35 | 35 | 35 | 35 | 35 |
| PVP | | 15 | 15 | 15 | 15 | 15 |

7

Note:

| Symbol | Compound | Trade Name | Manufacturer |
|---|---|---|---|
| EPT: | Ethylene-propylene terpolymer rubber | Esprene 505 | Sumitomo Chem. |
| NR: | Natural rubber | — | — |
| CSM: | Chlorosulfonated polyethylene rubber | Hypalone 40 | Dupont |
| NBR: | Nitrile rubber | Nipole 1042 | Nippon Zeon |
| IIR: | Isobutylene-isoprene rubber | ESSOBUTYL 268 | Esso. Chem. |
| M: | 2-Mercaptobenzo thiazole | | |
| TT: | Tetramethylthiuram disulfide | | |
| BZ: | Zinc dibutyl-dithiocarbamate | | |
| TRA: | Dipentamethylene-thiuraum tetrasulfide | | |
| DM: | Dibenzothiazyl disulfide | | |
| PZ: | Zinc dimethyl-dithiocarbamate | | |
| Antioxidant | Nickel dibutyl-dithiocarbamate | Antigen NBC | Sumitomo Chem. |
| AK—4S: | Crosslinked product of polysodium acrylate | Aquakeep 4S | Seitetsu Kagaku |
| Waterlock —A100: | Crosslinked saponi-fication product of starch-acrylo-nitrile copolymer | | Grain-processing Corp. |
| Sumikagel S—50: | Crosslinked saponi-fication product of methyl acrylate-vinyl acetate copolymer | | Sumitomo Chem. |
| PVP: | Polyvinylpyrrolidone | K—15 | KISHIDA KAGAKU |

8

## Table 10

| Soaking Time | 10 min | 1 h | 24 h |
|---|---|---|---|
| Example 6 | 30 | 70 | 580 |
| " 7 | 25 | 65 | 520 |
| " 8 | 30 | 70 | 600 |
| " 9 | 20 | 60 | 500 |
| " 10 | 30 | 75 | 530 |

**Claims**

1. A water-swellable elastomer composition comprising an elastomer and a water-absorbent resin, characterized in that it comprises a homogeneous mixture of 100 parts by weight of an elastomer, 5 to 300 parts by weight of a water-absorbent resin which absorbs water in an amount of at least 20 times the weight of the resin and 0.5 to 100 parts by weight of a water-soluble resin, wherein the water-absorbent resin is in form of a powder having a particle diameter of 400 μm or less and the water-soluble resin is selected from polyethylene oxide, a polyvinylpyrrolidone, a hydroxy ethylcellulose and a hydroxy propylcellulose.

2. A composition according to Claim 1, wherein the amounts of the water-absorbent resin and the water-soluble resin are, respectively, 10—200 parts by weight and 1—50 parts by weight per 100 parts by weight of the elastomer.

3. A composition according to Claim 1, wherein the elastomer is a chloroprene rubber, a butadiene rubber, a styrene-budadiene rubber, an acrylonitrile-butadiene rubber, an isobutylene-isoprene rubber, a fluororubber, an ethylene-propylene rubber, a chlorosulfonated polyethylene, a silicone rubber, an urethane rubber, a polysulfide rubber, an acrylic rubber or a natural rubber.

4. A composition according to Claim 1, wherein the elastomer is a chloroprene rubber.

5. A composition according to Claim 1, wherein the elastomer is a styrene-budadiene rubber.

6. A composition according to Claim 1, wherein the water-absorbent resin is a crosslinked product of polyacrylate, a crosslinked product of starch-acrylate graft copolymer, a crosslinked product of hydrolyzate of starch-acrylonitrile graft copolymer, a crosslinked product of carboxymethylcellulose, a crosslinked product of polyvinyl alcohol, a crosslinked product of hydrolyzate of methyl (meth)acrylate-vinyl acetate copolymer or a crosslinked product of cellulose-sodium acrylate graft copolymer.

7. A composition according to Claim 1, wherein the water-absorbent resin is a crosslinked product of polyacrylate.

8. A composition according to Claim 1, wherein the water-absorbent resin is a crosslinked product of starch-arcylate graft copolymer.

9. A composition according to Claim 1, wherein the water-absorbent resin is in the form of a powder having a particle diameter of 100 μm or less.

10. A composition according to Claim 1, wherein the water-absorbent resin and the water-soluble resin are homogeneously dispersed in the elastomer.

11. A composition according to Claim 1, wherein the water-absorbent resin is a water-absorbent resin having previously absorbed therein 10—100 parts by weight of water per 100 parts by weight of the water-absorbent resin.

**Patentansprüche**

1. Wasserquellbare Elastomer-Zusammensetzung, umfassend ein Elastomer und ein wasserabsorbierendes Harz, dadurch gekennzeichnet, dass es eine homogene Mischung aus 100 Gew.-Teilen eines Elastomers, 5 bis 300 Gew.-Teilen einies wasserabsorbierenden Harzes, welches Wasser in einer Menge von wenigstens dem 20-fachen Gewicht des Harzes absorbiert, und 0,5 bis 100 Gew.-Teiler eines wasserlöslichen Harzes umfasst, wobei das wasserabsorbierende Harz in Form eines Pulvers vorliegt mit einem Teilchendurchmesser von 400 μm oder weniger, und das wasserlösliche Harz ausgewählt ist aus Polyethylenoxid, einem Polyvinylpyrrolidon, einer Hydroxyethylzellulose und einer Hydroxypropylzellulose.

2. Zusammensetzung gemäss Anspruch 1, in welcher die Mengen des wasserabsorbierenden Harzes und des wasserlöslichen Harzes 10 bis 200 Gew.-Teile bzw. 1 bis 50 Gew.-Teile pro 100 Gew.-Teile des Elastomers betragen.

3. Zusammensetzung gemäss Anspruch 1, in welcher das Elastomer ein Chloroprenkautschuk, ein Butadienkautschuk, ein Styrol-Butadienkautschuk, ein Acrylnitril-Budadienkautschuk, ein Isobutylen-Isoprenkautschuk, ein Fluorkautschuk, ein Ethylen-Propylenkautschuk, ein chlorsulfoniertes Polyethylen, ein Silikonkautschuk, ein Urethankautschuk, ein Polysulfidkautschuk, ein Acrylkautschuk oder ein natürlicher Kautschuk ist.

4. Zusammensetzung gemäss Anspruch 1, in welcher das Elastomer ein Chloroprenkautschuk ist.

5. Zusammensetzung gemäss Anspruch 1, in welcher das Elastomer ein Styrol-Butadieknautschuk ist.

6. Zusammensetzung gemäss Anspruch 1, in welcher das wasserabgsorbierende Harz ein Vernetzungsprodukt eines Polyacrylats, ein Vernetzungsprodukt eines Stärke-Acrylat-Pfropfcopolymers, ein Vernetzungsprodukt eines hydrolysats eines Stärke-Acrylnitril-Pfropfcopolymers, ein Vernetzungsprodukt von Carboxymethylzellulose, ein Vernetzungsprodukt von Polyvinylalkohol, ein Vernetzungsprodukt eines Hydrolysats von Methyl(meth)acrylat-Vinylacetat-Copolymer oder ein Vernetzungsprodukt eines Zellulose-Natriumacrylat-Pfropfcopolymers ist.

7. Zusammensetzung gemäss Anspruch 1, in welcher das wasserlöliche Harz ein Vernetzungsprodukt eines Polyacrylats ist.

8. Zusammensetzung gemäss Anspruch 1, in welcher das wasserlöliche Harz ein Vernetzungsprodukt eines Stärke-Acrylat-Pfropfcopolymers ist.

9. Zusammensetzung gemäss Anspruch 1, in welcher das wasserabsorbierende Harz in Form eines Pulvers mit einem Teilchendurchmesser vonm 100 µm oder weniger vorliegt.

10. Zusammensetzung gemäss Anspruch 1, in welcher das wasserabsorbierende Harz und das wasserlösliche Harz homogen in dem Elastomer dispergiert sind.

11. Zusammensetzung gemäss Anspruch 1, in welcher das wasserabsorbierende Harz ein wasserabsorbierendes Harz ist, in welchem zuvor 10 bis 100 Gew.-Teile Wasser pro 100 Gewl.-Teilen des wasserabsorbierenden Harzes absorbiert sind.

**Revendications**

1. Une composition d'élastomère gonflable dans l'eau comprenant un élastomère et une résine absorbant l'eau, caractérisée en ce qu'elle comprend un mélange homogène de 100 parties en poids d'un élastomère, 5 à 300 parties en poids d'une résine absorbant l'eau qui absorbe l'eau en une quantité d'au moins 20 fois le poids de la résine et 0,5 à 100 parties en poids d'une résine soluble dans l'eau, où la résine absorbant l'eau est sous forme d'une poudre ayant un diamètre des particules de 400 µm ou moins et la résine soluble dans l'eau est choisie parmi un polyéthylène oxyde, une polyvinylpyrrolidone, une hydroxyéthylcellulose et une hydroxypropylcellulose.

2. Une composition selon la revendication 1, dans laquelle les quantités de la résine absorbant l'eau et de la résine soluble dans l'eau sont respectivement de 10 à 200 parties en poids et de 1 à 50 parties en poids pour 100 parties en poids de l'élastomère.

3. Une composition selon la revendication 1, dans laquelle l'élastomère est un caoutchouc de chloroprène, un caoutchouc de butadiène, un caoutchouc de styrène-budadiène, un caoutchouc d'acrylonitrile-budadiène, un caoutchouc d'isobutylène-isoprène, un fluorocaoutchouc, un caoutchouc d'éthylène-propylène, un polyéthylène chlorosulfoné, un caoutchouc de silicone, un caoutchouc uréthannique, un caoutchouc de polysulfure, un caoutchouc acrylique ou un caoutchouc naturel.

4. Une composition selon la revendication 1, dans laquelle l'élastomère est un caoutchouc de chloroprène.

5. Une composition selon la revendication 1, dans laquelle l'élastomère est un caoutchouc de styrène-butadiène.

6. Une composition selon la revendication 1, dans laquelle la résine absorbant l'eau est un produit réticulé de polyacrylate, un produit réticulé de copolymère greffé d'amidon-acrylate, un produit réticulé d'un hydrolysat de copolymère greffé d'amidonacrylonitrile, un produit réticulé de carboxyméthylcellulose, un produit réticulé d'alcool polyvinylique, un produit réticulé d'hydrolysat de copolymère de (méth)acrylate de méthyle-acétate de vinyle ou un produit réticulé de copolymère greffé de celluloseacrylate de sodium.

7. Une composition selon la revendication 1, dans laquelle la résine absorbant l'eau est un produit réticulé de polyacrylate.

8. Une composition selon la revendication 1, dans laquelle la résine absorbant l'eau est un produit réticulé d'un copolymère greffé d'amidon-acrylate.

9. Une composition selon la revendication 1, dans laquelle la résine absorbant l'eau est sous forme d'une poudre ayant un diamètre des particules de 100 µm ou moins.

10. Une composition selon la revendication 1, dans laquelle la résine absorbant l'eau et la résine soluble dans l'eau sont dispersées de façon homgène dans l'élastomère.

11. Une composition selon la revendication 1, dans laquelle la résine absorbant l'eau est une résine absorbant l'eau ayant préalablement absorbé 10 à 100 parties en poids d'eau pour 100 parties en poids de la résine absorbant l'eau.